Europäisches Patentamt

European Patent Office

Office européen des brevets

(19)

(11) Veröffentlichungsnummer: **0 117 505**
**B1**

(12) **EUROPÄISCHE PATENTSCHRIFT**

(45) Veröffentlichungstag der Patentschrift: **08.08.90**

(51) Int. Cl.⁵: **B 27 B 5/22, B 23 Q 1/20**

(21) Anmeldenummer: **84101778.3**

(22) Anmeldetag: **21.02.84**

(54) **Holzbearbeitungsmaschine.**

(30) Priorität: **25.02.83 DE 8305324 u**

(43) Veröffentlichungstag der Anmeldung:
**05.09.84 Patentblatt 84/36**

(45) Bekanntmachung des Hinweises auf die
Patenterteilung:
**08.08.90 Patentblatt 90/32**

(84) Benannte Vertragsstaaten:
**AT CH DE FR GB IT LI SE**

(56) Entgegenhaltungen:
**FR-A-2 092 962**
**FR-A-2 342 138**
**US-A-4 128 029**
**US-A-4 248 115**

(73) Patentinhaber: **Josef Scheppach
Maschinenfabrik GmbH & Co.
Günzburger Strasse 69
D-8873 Ichenhausen (DE)**

(72) Erfinder: **Scheppach, Fritz
Günzburger Strasse 69
D-8873 Ichenhausen (DE)**

(74) Vertreter: **Munk, Ludwig, Dipl.-Ing.
Patentanwalt Prinzregentenstrasse 1
D-8900 Augsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Holzbearbeitungsmaschine gemäß Gattungsbegriff des Anspruchs 1.

Eine Anordnung dieser Art ist aus der FR-A 20 92 962 bekannt. Bei dieser bekannten Anordnung, bei der die Längsführung auf einem stationären Maschinengestell aufgenommen ist und der Maschinentisch ein abnehmbares Anbauteil bildet, sind zur Befestigung des Maschinentisches an den Befestigungsschinen Schrauben vorgesehen, die durch zugeordnete Ausnehmungen der Befestigungsschinen hindurchgreifen. Die den Schrauben zugeordneten Ausnehmungen sind dabei als Langlöcher ausgebildet, um eine Justierung des Maschinentisches zu ermöglichen. Bei abgenommenem Anbauteil bleiben die Befestigungsschinen am stationären Maschinengestell in Stellung, was sich als sehr hinderlich erweisen kann und daher die Bedienungsfreundlichkeit und Arbeitssicherheit ungünstig beeinflußt. Ein weiterer Nachteil ist darin zu sehen, daß bei jedem Anbauvorgang auch eine neue Justierung des Maschinentisches vorgenommen werden muß, was sich als sehr umständlich erweist.

Aus der US-A 4 248 115 ist eine Holzbearbeitungsmaschine bekannt, bei der der Maschinentisch auf einem stationären Maschinengestell aufgenommen ist, an welchem eine Längsführung für einen abnehmbaren Schlitten befestigt ist. Die Längsführung selbst ist zwar mit dem Gestell verschraubt, bleibt aber auch bei abgenommenem Schlitten am Maschinengestell in Stellung, um die beim Anbau vorgenommene Justierung beizubehalten. Die über den Maschinentisch auskragende Längsführung erweist sich bei Arbeiten ohne Schlitten als sehr sperrig, was sich ebenfalls ungünstig auf die Bedienungsfreundlichkeit und Arbeitssicherheit auswirken kann.

Hiervon ausgehend ist es die Aufgabe der vorliegenden Erfindung, eine Holzbearbeitungsmaschine gattungsgemäßer Art zu schaffen, bei der die Längsführung als einfach abnehmbares und dennoch zuverlässig und genau fixierbares Anbauelement ausgebildet ist.

Diese Aufgabe wird durch die kennzeichnenden Maßnahmen des Anspruchs 1 gelöst.

Die erfindungsgemäßen Maßnahmen ergeben eine zuverlässige Schnellverbindung zwischen Längsführung und Maschinentisch. Zum Anbau der Längsführung sind die Befestigungsschinen einfach mit ihrem hinteren Ende in die zugeordnete Kippsicherung einzuschieben und anschließend mit der nach unten weisenden Rastkerbe am zugeordneten Stützlager einzuhängen, wodurch sich eine eindeutige Lagefixierung der Längsführung ergibt. Aufgrund des durch das Gewicht der Längsführung ausgeübten Kippmoments bezüglich des als Drehachse fungierenden, der Rastkerbe zugeordneten Stützlagers ist sichergestellt, daß die Längsführung zuverlässig in Stellung bleibt. Zweckmäßig kann diese Stellung zusätzlich durch geeignete Spannelemente gesichert werden. Zum Abnehmen der Längsführung ist es lediglich erforderlich, die gegebenenfalls vorgesehenen Spannelemente zu lösen, sowie die Längsführung so weit anzuheben und auszufahren, daß die Rastkerben und das hintere, gegen Kippen gesicherte Ende der Befestigungsschinen außer Eingriff mit dem jeweils zugeordneten Stützlager kommen. Die erfindungsgemäßen Maßnahmen gestatten demnach einen schnellen An- und Abbau der Längsführung, was eine hohe Bedienungsfreundlichkeit und Arbeitssicherheit erwarten läßt.

In vorteilhafter Weiterbildung der übergeordneten Maßnahmen können die Befestigungsschinen im Bereich ihres hinteren Endes gabelförmig ausgebildet sein. Hierbei ergibt sich eine praktisch durch ein nach hinten offenes Langloch gebildete Einfahrausnehmung, der einfach ein Bolzen zur Bildung des zugeordneten Stützlagers zugeordnet sein kann, was den Ein- und Ausfahrvorgang sowie das Einrasten der Rastkerbe erleichtert.

Eine weitere zweckmäßige Maßnahme kann darin bestehen, daß die Rastkerbe im Bereich des längsführungsseitigen Endes der Befestigungsschinen angeordnet ist. Hierdurch ergibt sich eine günstige Verteilung der Lagerkräfte auf die tischseitigen Stützlager.

In vorteilhafter Weise können zur Bildung der Stützlager Bolzen vorgesehen sein, die im Bereich ihrer über die zugeordnete Anbaulasche auskragenden Enden mit einem Gewinde zur Aufnahme einer von Hand betätigbaren Spannmutter versehen sind. Diese Maßnahme ergibt eine einfache Möglichkeit zur zusätzlichen Sicherung der in Stellung gebrachten Längsführung. Um im Bereich der Rastkerbe eine zuverlässige Auflage einer derartigen Spannmutter zu gewährleisten, kann vorteilhaft eine Unterleglasche vorgesehen sein, die mit Bohrungen für beide Bolzen versehen ist.

Weitere zweckmäßige Ausgestaltungen und vorteilhafte Weiterbildungen der übergeordneten Maßnahmen ergeben sich aus der nachstehenden Beschreibung eines Ausführungsbeispiels anhand der Zeichnung in Verbindung mit den restlichen Unteransprüchen.

In der Zeichnung zeigen:

Figur 1 eine Ansicht eines Maschinentisches mit angebauter Längsführung in Richtung der Längsführung gesehen,

Figur 2 einen Schnitt entlang der Linie II/II in Figur 1 und

Figur 3 eine Ansicht der abgenommenen Längsführung in Richtung der Längsführung gesehen.

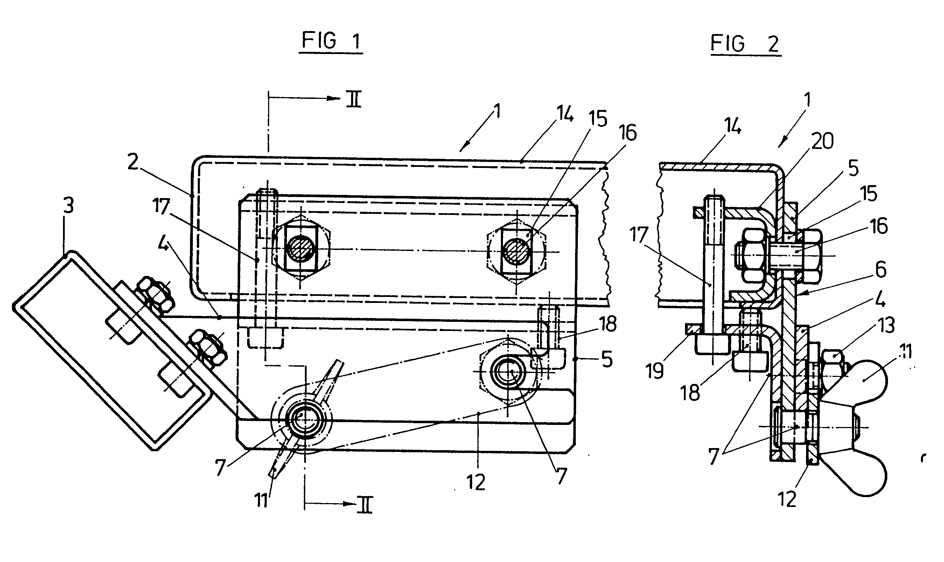

Der Aufbau und die Wirkungsweise einer Kreissäge oder einer Fräse sind an sich bekannt. Der der Figur 1 zugrunde liegende Maschinentisch, der einer Kreissäge oder einer Fräse zugeordnet sein kann, besteht aus einer auf einem nicht dargestellten Stützgestell aufnehmbaren Tischplatte 1, die als Blechformling mit umlaufender Randleiste 2 ausgebildet ist. Im Bereich der von der Bedienungsseite des Maschinentisches aus gesehen linken Tischseitenkante ist eine Längsführung 3 zur Aufnahme eines nicht dargestellten Schiebeschlittens vorgesehen, der mit einem Queranschlag zum Ablängen von Werkstücken mittels eines Kreissägenblatts bzw. zum Fräsen von Zapfen mittels einer Frässcheibe oder dergleichen versehen ist. Die Längsführung 3 besteht aus einem Vierkantrohr, auf dem der zugeordnete Schlitten mit entsprechenden Rollen geführt ist.

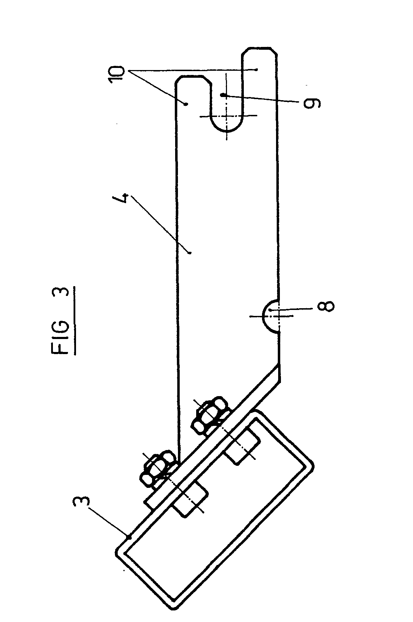

Die Längsführung 3 ist zur Vermeidung von Sperrigkeit als Anbauelement ausgebildet, das leicht und schnell an den zugeordneten Maschinentisch anbaubar bzw. von diesem abnehmbar ist. Hierzu ist die Längsführung 3 mit zwei etwa im Abstand der zur Längsführung 3 senkrechten Tischkanten angeordneten, tischseitig auskragenden Befestigungsschienen 4 versehen, die in eine tischseitig vorgesehene Anbaueinrichtung lösbar einlegbar sind. Die Anbaueinrichtung besteht, wie die Figuren 1 und 2 weiter erkennen lassen, aus im Bereich der den Befestigungsschienen 4 zugeordneten Tischkanten vorgesehenen Anbauplatten 5 mit jeweils nach außen weisender Anbaufläche 6 und jeweils zwei lotrecht über diese Anbaufläche 6 auskragenden, auf Abstand gesetzten Bolzen 7. Die Bolzen 7 sind in zugeordnete Bohrungen der Anbauplatten 5 spielfrei eingepreßt. Die Befestigungsschienen 4 sind, wie am anschaulichsten Figur 3 erken, nen läßt, im Bereich ihrer Unterkante mit einer längsführungsnah angeordneten, durch eine halbkreisförmige Ausnehmung gebildeten, nach unten offenen Rastkerbe 8 versehen und im Bereich ihres hinteren, von der Längsführung 3 wegweisenden Endes gabelförmig ausgebildet. Hierdurch ergibt sich eine durch ein nach hinten offenes Langloch gebildete Einfahrausnehmung 9, die von einer unteren Sicherungslasche 10 untergriffen und von einer oberen Sicherungslasche 10 übergriffen ist. Die Rastkerbe 8 und die Einfahrausnehmung 9 sind querschnittsmäßig an die jeweils zugeordneten Stützlager für die Befestigungsschienen 4 bildenden Bolzen 7 angepaßt. Das Zentrum der Rastkerbe 8 und der Mittelpunkt des das die Einführausnehmung 9 bildende Langloch längsführungsseitig begrenzenden Radiuses entspricht dabei dem Abstand der Achsen der tischseitigen Bolzen 7.

Zum Anbau der Längsführung 3 an die Tischplatte 1 werden die Befestigungsschienen 4 mit ihrer Einfahrausnehmung 9 zum Eingriff mit dem jeweils zugeordneten, in Anbaurichtung hinteren Bolzen 7 gebracht und so weit eingeschoben, bis die Rastkerben 8 in die jeweils zugeordneten, vorderen Bolzen 7 einrasten. Hierdurch ergibt sich eine genaue Fixierung der Längsführung 3 hinsichtlich Höhe und Tischabstand. Die in die Einfahrausnehmung 9 eingreifenden Bolzen 7 ergeben dabei zusammen mit den die Einfahrausnehmung 9 jeweils begrenzenden Sicherungslaschen 10 eine Kippsicherung des auf den den Rastkerben 8 zugeordneten Bolzen schwenkbar ruhenden, die Längsführung 3 un die Befestigungsschienen 4 umfassenden Trägers. Die Befestigungsschienen kommen dabei mit durch ihre einander zugewandten Seitenflächen gebildeten Anlageflächen zur Anlage an den zugeordneten Anlageflächen 6 der Anbauplatten 5, was eine exakte Festlegung in Richtung des Verlaufs der Längsführung 3 ergibt.

Aufgrund des durch das Gewicht der Längsführung 3 ausgeübten Moments bleiben die Befestigungsschienen 4 in Eingiff mit den tischseitige Stützlager bildenden Bolzen 7. Zur zusätzlichen Sicherung können von Hand betätigbare Spannorgane vorgesehen sein. Im dargestellten Ausführungsbeispiel sind die Bolzen 7 hierzu im Bereich ihres über die Anbauplatte 5 auskragenden Endes als Schraubenbolzen ausgebildet, so daß eine von Hand betätigbare, hier als Flügelmutter ausgebildete Spannmutter 11 aufgenommen werden kann. Es genügt, wenn lediglich im Bereich der den Rastkerben 8 zugeordneten Bolzen 7 derartige Spannmuttern 11 vorgesehen sind. Um trotz der geringen Eingriffstiefe der den durch halbkreisförmige Ausnehmungen gebildeten Rastkerben 8 zugeordneten Bolzen 7 eine großflächige Auflage der Spannmuttern 11 zu gewährleisten, ist im Bereich jeder Anbauplatte 5 eine Unterlegleiste 12 vorgesehen. Diese kann, wie im dargestellten Ausführungsbeispiel, auf die beiden Bolzen 7 jeder Anbauplatte 5 aufgesteckt und im Bereich des hinteren, der Einfahrausnehmung 9 zugeordneten Bolzen 7 mittels einer Mutter 13 gesichert sein. Hierbei ist demnach auch der zweite Bolzen 7 als Gewindebolzen ausgeführt. Die Muttern 13 sind jeweils lediglich so weit aufgeschraubt, daß die Befestigungsschienen 4 mit ihrer Einfahrausnehmung 9 bequem ein- und ausgefahren werden können. Die Spannmutter 11 ist im Anbauzustand von Hand angezogen und wird zum Abbauen der Längsführung 3 einfach von Hand so weit gelöst, daß sich ebenfalls eine leichte Bewegbarkeit der Befestigungsschienen 4 ergibt.

Um bei der Erstmontage eine exakte Höhenjustierung der Längsführung 3 zu ermöglichen, sind die Anbauplatten 6 mittels einer Stelleinrichtung bezüglich der Arbeitsfläche 14 der Tischplatte 1 verstellbar. Zur Gewährleistung des hierfür erforderlichen Verschiebefreiheitsgrads sind die mit der Tischplatte 1 verschraubten Anbauplatten 5, wie die Figuren 1 und 2 weiter erkennen lassen, mit Langlöchern 15 versehen, durch welche jeweils eine Befestigungsschraube 16 zur Verbindung der Anbauplatten 6 mit der umlaufenden Randleiste 2 der Tischplatte 1 hindurchgreifen. Die jeder Anbauplatte 5 zugeordnete Stelleinrichtung besteht aus zwei im Bereich der seitlichen Kanten der jeweils zugeordneten Anbauplatte 5 angeordneten Stellschrauben 17 bzw. 18, über welche die zugehörige Anbauplatte 6 an der Tischplatte 1 abgestützt ist. Zur Aufnahme der Stellschrauben 17 bzw. 18 sind die Anbauplatten 5 und die Tischplatte 1 mit einander gegenüberliegenden Stützleisten 19 bzw. 20 versehen. Eine Stellschraube, hier die Stellschraube 17, untergreift mit ihrem Kopf die anbauplattenseitige Stützleiste 19 und greift mit einem Gewinde in eine zugeordnete Gewindebohrung der tischseitigen Stützleiste 20 ein. Die andere Stellschraube 18 greift mit einem Gewinde in eine zugeordnete Gewindebohrung der anbauplattenseitigen Stützleiste 19 ein und drückt mit ihrer vorderen Stirnseite auf die tischseitige Stützleiste 20, bzw. im dargestellten Ausführungsbeispiel auf eine von einem Steg der tischseitigen Stützleiste 20 unterfaßte, nach innen gehende Randabwinklung der umlaufenden Randleiste 2 der Tischplatte 1. Beim Fehlen dieser Randabwinklung kann die Stellschraube 18 direkt mit einem zugeordneten Steg der tischseitigen Stützleiste 20 zusammenwirken. Die durch im Durchmesser genau angepaßte Bohrungen der Randleiste 2 der Tischplatte 1 hindurchgreifenden Befestigungsschrauben 16 ergeben so oder so eine definierte Anordnung der tischseitigen Stützleisten 20. Die anbauplattenseitigen Stützleisten 19 können mit der jeweils zugeordneten Anbauplatte verschweißt, vernietet oder verschraubt oder mittels der Bolzen 7 hiermit verbunden sein. Zum Einjustieren der Anbauplatten 5 werden die Befestigungsschrauben 16 nur so weit angezogen daß mit Hilfe der Stellschrauben 17 bzw. 18 eine Stellbewegung bewerkstelligt werden kann. Nach Erreichen der gewünschten Stellung werden die Befestigungsschrauben 16 endgültig angezogen, womit die eingestellte Stellung fixiert wird.

**Patentansprüche**

1. Holzbearbeitungsmaschine, insbesondere Kreissäge oder Fräse, mit einem Maschinentisch und mindestens einem gegenüber diesem bewegbaren Schiebeschlitten, der auf einer zugeordneten Längsführung (3) aufnehmbar ist, die im Bereich einer Anbauseite des Maschinentisches angeordnet ist und mindestens zwei anbauseitig auskragende Befestigungsschinen (4) mit seitlichen Anlageflächen aufweist, denen tischseitig jeweils eine Anbaufläche (6) zugeordnet ist, dadurch gekennzeichnet, daß die Befestigungsschinen (4) im Bereich ihrer jeweils nach unten weisenden Kante mindestens eine nach unten offene Rastkerbe (8) aufweisen und mit dieser an einem seitlich über die Anbaufläche (6) auskragenden Stützlager (7) des Maschinentisches einhängbar sind und daß das hintere, von der Längsführung (3) wegweisende Ende der Befestigungsschinen (4) mit mindestens einer nach hinten offenen, dem tischseitigen Stützlager (7) zugeordneten Einfahrausnehmung (9) versehen ist, die von einer Sicherungslasche (10) zumindest untergriffen ist.

2. Holzbearbeitungsmaschine nach Anspruch 2, dadurch gekennzeichnet, daß die Befestigungsschinen (4) im Bereich ihres hinteren Endes gabelförmig ausgebildet sind.

3. Holzbearbeitungsmaschine nach einem der vorhergehenden Ansprüche, dadurch gekennzeichnet, daß die Rastkerbe (8) im Bereich des längsführungsseitigen Endes der Befestigungsschinen (4) angeordnet ist.

4. Holzbearbeitungsmaschine nach einem der vorhergehenden Ansprüche, dadurch gekennzeichnet, daß die tischseitigen Stützlager als über die Anbaufläche (6) auskragende Bolzen (7) ausgebildet sind und daß die Rastkerbe (8) und die Einfahrausnehmung (9) diesen querschnittmäßig angepaßt sind.

5. Holzbearbeitungsmaschine nach einem der vorhergehenden Ansprüche, dadurch gekennzeichnet, daß die Anbauflächen (6) im Bereich der zur Längsführung (3) lotrechten Seitenkanten des Maschinentisches angeordnet sind.

6. Holzbearbeitungsmaschine nach einem der vorhergehenden Ansprüche, dadurch gekennzeichnet, daß zumindest die den Rastkerben (8) zugeordneten Bolzen (7) im Bereich ihrer über die Anbaufläche (6) auskragenden Enden mit einem Gewinde zur Aufnahme einer von Hand betätigbaren Spannmutter (11) versehen sind, der eine den zugeordneten Bolzen (7) umfassende Auflage, vorzugsweise in Form einer zusätzlich am einfahrausnehmungsseitigen Bolzen (7) aufgenommenen Unterlegleiste (12) zugeordnet ist.

7. Holzbearbeitungsmaschine nach einem der vorhergehenden Ansprüche, dadurch gekennzeichnet, daß der Maschinentisch mit jeweils eine Anbaufläche (6) und die zugehörigen Stützlager aufweisenden Anbauplatten (5) versehen ist, die mit von tischseitig fixierten Befestigungsschrauben (16) durchsetzten Langlöcher (15) versehen und durch Stellschrauben (18 bzw. 19) tischseitig abstützbar sind.

8. Holzbearbeitungsmaschine nach Anspruch 7, dadurch gekennzeichnet, daß die jeder Anbauplatte (5) zugeordnete Stelleinrichtung zwei Stellschrauben (18, 19) aufweist, von denen die eine Stellschraube (17) tischseitig in Gewindeeingriff und anbauplattenseitig in Stützeingriff und die andere Stellschraube (18) tischseitig in Stützeingriff und anbauplattenseitig in Gewindeeingriff ist.

9. Holzbearbeitungsmaschine nach einem der vorhergehenden Ansprüche 7 und 8, dadurch gekennzeichnet, daß der Maschinentisch zusammen mit der jeweils gegenüberliegenden Anbauplatte (6) durch die Befestigungsschrauben (16) an einer zugeordneten Randleiste (2) festlegbar, den Stellschrauben (17 bzw. 18) zugeordnete Stützleisten (20) aufweist, die jeweils einer anbauplattenseitigen Stützleiste (19) gegenüberliegen.

**Revendications**

1. Machine pour travailler le bois, notamment scie circulaire ou fraise, comportant une table et au moins un chariot mobile en coulissement par rapport à cette table, le chariot étant agencé pour être monté sur un guide longitudinal (3) placé au voisinage d'un côté à montures de la table et pourvu d'au moins deux bras de fixation (4) proéminents du côté des montures et ayant chacun, du côté de la table, une surface latérale d'appui à laquelle correspond une surface de montage (6) de la table, caractérisée en ce que les bras de fixation (4) comportent chacun, dans la zone de leur bord dirigé vers le bas, au moins une encoche (8) ouverte vers le bas et permettant d'accrocher le bras à un support (7) monté sur la table, ce support étant disposé en saillie latérale sur la surface de montage (6), et en ce que l'extrémité arrière, opposée au guide longitudinal (3), des bras de fixation (4) comporte au moins une ouverture d'introduction (9) ouverte vers l'arrière et correspondant à un support (7) monté sur la table, et au moins une patte de retenue (10) s'étendant sous ladite ouverture.

2. Machine selon la revendication 1, caractérisée en ce que les bras de fixation (4) ont une forme fourchue à leur extrémité arrière.

3. Machine selon l'une des revendications précédentes, caractérisée en ce que ladite encoche (8) se trouve à proximité de l'extrémité des bras (4) du côté du guide longitudinal.

4. Machine selon l'une des revendications précédentes, caractérisée en ce que lesdits supports montés sur la table sont formés par des boulons (7) disposés en saillie par rapport à la surface de montage (6) et en ce que l'encoche (8) et l'ouverture d'introduction (9) ont des sections adaptées à celles des boulons.

5. Machine selon l'une des revendications précédentes, caractérisée en ce que les surfaces de montage (6) sont disposées au voisinage des bords de la table qui sont perpendiculaires au guide longitudinal (3).

6. Machine selon l'une des revendications précédentes, caractérisée en ce qu'au moins les boulons (7) correspondant auxdites encoches (8) comportent un filetage dans la zone de leur extrémité saillante par rapport à la surface de montage, pour recevoir un écrou de serrage manuel (11) assoxié à une pièce d'appui entourant ledit boulon (7) et formée de préférence par une lame de calage (12) insérée également sur le boulon (7) correspondant à l'ouverture d'introduction.

7. Machine selon l'une des revendications précédentes, caractérisée en ce que la table est pourvue de plaques de montage (5) comportant chacune une surface de montage (6) et les supports correspondants, et en ce que ces plaques comportent des trous oblongs (15) traversés par des vis de fixation (16) fixées à la table et sont calées contre la table au moyen de vis de réglage (18, 19).

8. Machine selon la revendication 7, caractérisée en ce que le dispositif de réglage associé à chaque plaque de montage (5) comporte deux vis de réglage (18, 19), dont une première vis (17) est engagée dans un filetage du côté de la table et en appui du côté de la plaque de montage, et dont l'autre vis (18) est en appui du côté de la table et engagée dans un filetage du côté de la plaque de montage.

9. Machine selon l'une des revendications 7 et 8, caractérisée en ce que la table comporte des profilés de support (20) agencés pour être fixés à un profilé de bord correspondant (2) au moyen des vis de fixation (16) avec les plaques de montage (6) mutuellement opposées, ces profilés de support (20) étant associés aux vis de réglage (17, 18) et disposés en face de profilés de support (19) associés respectivement aux plaques de montage.

## Claims

1. A wood working machine, more particularly a circular saw or a router, comprising a machine frame and at least one sliding carriage which is able to be moved in relation to the same and is able to be mounted on an associated longitudinal guide (3), which is adjacent to a fixture mounting side of the machine table, and at least two attachment rails (4), which project on the mounting side, and have lateral abutment faces, with which on the table side a respective mounting face (6) is associated, characterized in that at their respectively inwardly directed edge the attachment rails (4) have at least one downwardly opening detent notch (8), and using the latter are able to be connected with a supporting bearer (7), projecting past the fixture mounting surface (6), of the machine table and in that the rear end, which is directed away from the 1f (3), of the attachment rails (4) is provided with at least one rearwardly open insertion recess (9) associated with the supporting bearer (7) on the table side, such recess having a securing lug (10) at least fitted under it.

2. The wood working machine as claimed in claim 2, characterized in that the attachment rails (4) are forked at their rear ends.

3. The wood working machine as claimed in any one of the preceding claims, characterized in that the detent notch (8) is arranged in the vicinity of the end, which is on the longitudinal guide side, of the attachment rails (4).

4. The wood working machine as claimed in any one of the preceding claims, characterized in that the supporting bearer on the table side is in the form of a pin (7) extending past the fixture mounting surface (6) and in that the detent notch (8) and the insertion recess (9) are adapted to the same in cross section.

5. The wood working machine as claimed in any one of the preceding claims, characterized in that the fixture mounting surfaces (6) are arranged in the vicinity of said edges perpendicular to the longitudinal guide (3), of the machine table.

6. The wood working machine as claimed in any one of the preceding claims, characterized in that at least the pins (7) associated with the detent notches (8) have a screw thread on their ends projecting past the fixture mounting surface (6), in order to receive a holding nut (11), which is able to be tightened by hand and which is provided with a rest encircling the associated pin (7), preferably in the form of a washer rail (12) mounted in addition on the pin (7) on the insertion recess side.

7. The wood working machine as claimed in any one of the preceding claims, characterized in that the machine table is provided with fixture plates (5) having respectively one fixture mounting face (6) and the associated supporting bearers, same being provided with slots (15) through which attachment screws (16) extend fixed on the table and which are able to be supported on the table side by means of set screws (18 and, respectively, 19).

8. The wood working machine as claimed in claim 7, characterized in that the setting means associated with each fixture plate (5) has two set screws (18 and 19), of which one set screw (17) is in screw engagement with the table and on the fixture plate side is in supporting engagement and the other set screw (18) is supporting engagement on the table side and on the fixture plate side is in threaded engagement.

9. The wood working machine as claimed in claim 7 and to claim 8, characterized in that the machine table together with the respectively oppositely placed fixture plate (6) is able to be fixed by the attachment screws (15) on a associated edge rail (2), has supporting rails (20) associated with the set screws (17 and, respectively, 18), which are respectively opposite to one supporting rail (19) on the fixture plate side.

FIG 1

FIG 2

EP 0 117 505 B1

FIG 3